# FASCICULE DE BREVET EUROPEEN

(11) **EP 3 877 316 B1**
(45) Date de publication et mention de la délivrance du brevet: **20.07.2022**
(21) Numéro de dépôt: 19839637.6
(22) Date de dépôt: 24.11.2019
(51) Int. Cl.: B66F 9/075

(54) **PROCÉDÉ ET DISPOSITIF D'AIDE AU POSITIONNEMENT DE FOURCHES D'UN ENGIN DE MANUTENTION**
VERFAHREN UND VORRICHTUNG ZUR UNTERSTÜTZUNG DER POSITIONIERUNG VON GABELN EINER HANDHABUNGSMASCHINE
METHOD AND DEVICE FOR HELPING TO POSITION FORKS OF A HANDLING MACHINE

(30) Priorité: 28.11.2018 FR 1872027
(43) Date de publication de la demande: 15.09.2021
(73) Titulaire: Capron, Michel, F-68720 Hochstatt (FR)
(72) Inventeur: Capron, Michel, F-68720 Hochstatt (FR)
(86) Numéro de dépôt international: PCT/FR2019/000188
(87) Numéro de publication internationale: WO 2020/109677

(56) Documents cités:
- WO-A1-2017/087109

## Description

### Domaine technique

La présente invention concerne un procédé d'aide au positionnement des bras de fourches d'un engin de manutention à fourches qui au moyen d'un faisceau lumineux projetant une marque lumineuse sur une charge à manutentionner informe le conducteur dudit engin de manutention de la position relative desdits bras desdites fourches par rapport à ladite charge à manutentionner pour lui permettre de positionner de façon adéquate lesdits bras desdits fourches avant de les engager, en toute sécurité, sous ladite charge à manutentionner.

Elle concerne également un dispositif d'aide au positionnement des bras de fourches d'un engin de manutention à fourches qui au moyen d'un faisceau lumineux projetant une marque lumineuse sur une charge à manutentionner informe le conducteur dudit engin de manutention de la position relative desdits bras desdites fourches par rapport à ladite charge à manutentionner pour lui permettre de positionner de façon adéquate lesdits bras desdits fourches avant de les engager, en toute sécurité, sous ladite charge à manutentionner, pour la mise en œuvre du procédé.

### Technique antérieure

La présente invention fait plus particulièrement partie du domaine des procédés et dispositifs qui, depuis un engin de manutention, envoient une marque lumineuse sur la charge à manutentionner pour permettre au conducteur de l'engin de mieux apprécier la position relative des fourches de son engin par rapport à une charge à manutentionner.

Les conducteurs d'engins de manutention à fourches sont en permanence confrontés à la difficulté d'engager les fourches sous la charge à manutentionner que cette charge soit posée sur une palette ou sur tout autre moyen de calage. En effet, le conducteur a en général peu de place pour insérer ses fourches, la visibilité qu'il a de son environnement est réduite du fait de la présence entre lui et la charge du mat de l'engin et de son tablier. Très souvent il doit aller chercher ses charges en hauteur, confronté alors à des problèmes de parallaxe. Cette difficulté engendre des pertes de temps dans la manipulation des charges et parfois les charges sont altérées provoquant alors des pertes de produits. Il y a donc un réel besoin et un intérêt économique certain à résoudre du mieux possible ce problème de manipulation de charge à l'aide d'un engin à fourches.

Il existe de nombreux systèmes proposant une solution au problème précité, en particulier le brevet américain US 2002117607 au nom de Goddard, et le brevet français FR 292220 au nom de Demangeat. Ces brevets comportent encore des inconvénients, notamment :
- l'installation du dispositif sur l'engin ainsi que les réglages ne sont ni aisés ni rapides ;
- le dispositif est insuffisamment protégé des collisions éventuelles avec les charges à manutentionner.
- le conducteur ne reçoit aucune information sur la valeur d'inclinaison des fourches de son engin ;
- la marque lumineuse étant activée de façon intempestive, l'autonomie du dispositif est pénalisée quand ce dernier est alimenté par des accumulateurs ;
- la technologie retenue ne permet ni de régler facilement le fonctionnement du procédé mis en œuvre, ni d'ajouter de nouvelles fonctionnalités ; WO 2017/087109 A1 divulgue un procédé selon le préambule de la revendication 1.

### Exposé de l'invention

La présente invention se propose de réaliser un procédé et un dispositif qui répond à la totalité des exigences exprimées par les praticiens en matière de manutention de charges. Dans ce but le procédé et le dispositif qui en découle permettent de satisfaire de façon efficace les contraintes évoquées ci-dessus que les dispositifs d'aide connus ne sont pas en mesure de satisfaire.

Cet objectif est atteint par le procédé d'aide à la manutention d'une charge selon l'invention, tel que défini en préambule et caractérisé en ce que le faisceau lumineux est activé pendant au moins une étape choisie parmi l'ensemble des étapes du processus de manutention, ladite étape étant identifiée par des calculs et analyses portant sur la seule mesure du vecteur accélération totale agissant sur les fourches, ledit vecteur accélération totale étant par nature la résultante du vecteur accélération de pesanteur et du vecteur déplacement des fourches.

Selon l'invention, le faisceau lumineux est activé pendant l'étape de prise en charge de la charge à manutentionner, ladite étape de prise en charge étant identifiée, de façon continue, par les phases suivantes dudit procédé :
- extraction du vecteur accélération de déplacement du vecteur accélération totale des fourches,
- extraction des deux vecteurs composantes dudit vecteur accélération de déplacement des fourches,
- calcul par double intégration mathématique par rapport au temps portant sur les deux dits vecteurs composantes des vitesses et des déplacements horizontaux et verticaux des fourches,
- vérification que lesdites fourches sont en cours de déplacement vertical et que leur déplacement horizontal est lent voire nul.

Dans un mode particulier du procédé, le faisceau lumineux est rendu inactif si la hauteur des bras des fourches par rapport au sol est comprise entre deux valeurs de hauteur prédéterminées, la valeur de ladite hauteur desdits bras desdites fourches étant identifiée et comparée aux deux dites valeurs de hauteur prédéterminée, de façon continue, par les phases suivantes dudit procédé :
- extraction du vecteur accélération de déplacement du vecteur accélération totale des fourches,
- extraction du vecteur composante vertical dudit vecteur accélération de déplacement des fourches,
- calcul par double intégration mathématique par rapport au temps portant sur le dit vecteur composante vertical de la vitesse et du déplacement vertical desdites fourches,
- calcul de la hauteur des fourches par sommation desdits déplacements verticaux,
- vérification que ladite hauteur desdites fourches est comprise entre les deux dites valeurs de hauteur prédéterminées.

De manière avantageuse, le faisceau lumineux est activé lorsque l'angle d'inclinaison des bras des fourches par rapport à l'horizontale est compris entre deux valeurs angulaires prédéterminées, la valeur dudit angle d'inclinaison desdits bras desdites fourches étant identifiée, de façon continue, par les phases suivantes dudit procédé :
- extraction du vecteur accélération de pesanteur du vecteur accélération totale,
- extraction des vecteurs composantes dudit vecteur accélération de pesanteur suivant un repère orthonormé s'inclinant avec lesdites fourches,
- calcul dudit angle d'inclinaison desdits bras desdites fourches par rapport à une horizontale par calcul trigonométrique sur les deux dits vecteurs composantes dudit vecteur accélération de la pesanteur,
- vérification que ledit angle d'inclinaison est compris entre les deux dites valeurs angulaires prédéterminés.

Dans un mode particulier, le faisceau lumineux est activé et modulé suivant des modes différents en fonction de l'angle d'inclinaison desdits bras desdites fourches par rapport à l'horizontale :
- un premier mode lorsque ledit angle d'inclinaison desdits bras desdites fourches est compris dans une fourchette angulaire voisine de l'horizontale,
- un deuxième mode lorsque ledit angle d'inclinaison desdits bras desdites fourches est compris dans une fourchette angulaire au-dessus de l'horizontale,
- un troisième mode lorsque ledit angle d'inclinaison desdits bras desdites fourches est compris dans une fourchette angulaire en-dessous de l'horizontale,
- la valeur dudit angle d'inclinaison desdits bras desdites fourches étant identifiée et comparer auxdites fourchettes angulaires, de façon continue, par les phases suivantes dudit procédé :
   ∘ extraction du vecteur accélération de pesanteur du vecteur accélération totale,
   o extraction des vecteurs composantes dudit vecteur accélération de pesanteur suivant un repère orthonormé s'inclinant avec lesdites fourches,
   o calcul de l'angle d'inclinaison desdits bras desdites fourches par rapport à une horizontale par calcul trigonométrique sur lesdits vecteurs composantes de ladite accélération de pesanteur,
   ∘ vérification que ledit angle d'inclinaison est compris dans l'une desdites différentes fourchettes angulaires.

Dispositif d'aide au positionnement des bras de fourches d'un engin de manutention à fourches, pour la mise en œuvre du procédé décrit ci avant, caractérisé en ce qu'il comporte :
- un corps creux, d'une part installé sur l'une desdites fourche et d'autre part contenant un moyen électronique,
- ledit moyen électronique mettant en œuvre un accumulateur d'électricité, un accéléromètre, un microcontrôleur programmable et un module émetteur d'un faisceau lumineux,
- ledit accéléromètre mesurant de façon continue le vecteur accélération totale agissant sur les fourches,
- ledit microcontrôleur, étant d'une part chargé d'un programme informatique, et recevant d'autre part les informations dudit accéléromètre :
   o détermine par calculs, de façon continue, les valeurs des composantes du vecteur accélération de pesanteur, les valeurs des vecteurs composantes du vecteur accélération de déplacement, les valeurs d'inclinaison, les vitesses, déplacements et positions horizontaux et verticaux desdites fourches,
   ∘ identifie en fonction des valeurs calculées l'étape de manutention en cours,
   o pilote le fonctionnement dudit module émetteur dudit faisceau lumineux en fonction d'une part de l'étape de manutention identifiée et d'autre part dudit programme.

Selon une conception préférentielle, le corps est constitué d'un boitier cylindrique creux fermé par un bouchon haut et un bouchon bas, ledit corps étant relié à la fourche au moyen d'au moins une attache rapide, elle-même constituée :
- d'un collier de serrage circulaire, ajustable en diamètre et prenant place sur ledit boitier,
- d'un moyen magnétique prenant place sur ladite fourche,
- d'un moyen élastique d'une part solidaire audit collier et d'autre part solidaire audit moyen magnétique.

Avantageusement, le collier de serrage est de type collier à vis, le moyen élastique est un plot en caoutchouc, le moyen magnétique est un aimant en pot.

Selon un mode particulier de réalisation de l'invention, un moyen d'indexage du moyen magnétique est solidarisé à la fourche, ledit moyen d'indexage étant constitué d'une plaque de faible épaisseur solidarisée à ladite fourche, ladite plaque présentant au moins un perçage pour recevoir et indexer, de façon précise, ledit moyen magnétique sur ladite fourche.

Selon une variante de l'invention, le microcontrôleur est chargé d'un programme informatique qui peut être modifié à distance, par liaison radio, au moyen :
- d'un module émetteur récepteur, de type " Bluetooth ", prenant place sur le moyen électronique,
- d'un smartphone, d'une part extérieure au dispositif, et d'autre part pourvu d'une application de communication dédiée,
- ledit smartphone pouvant communiquer par ondes radio avec ledit module émetteur récepteur.

### Présentation des figures

Les figures annexées illustrent une forme de réalisation avantageuse de l'invention :
[fig. 1] représente une vue en perspective des fourches de l'engin équipées du dispositif de l'invention avant l'engagement des fourches sous la charge à manutentionner,
[fig. 2] représente une vue de face du dispositif de l'invention installé sur la tranche du montant de fourche,
[fig. 3] correspond à la figure 2 et représente une vue de côté du dispositif de l'invention installé sur la tranche du montant de fourche,
[fig. 4] est un synoptique de fonctionnement du moyen électronique mis en œuvre par le dispositif de l'invention,
[fig. 5] est un schéma représentant, dans un repère orthonormé ohvl les composantes du vecteur accélération totale, ainsi que les composantes du vecteur accélération de déplacement,
[fig. 6] représente une vue en perspective des fourches après inclinaison, on y distingue le vecteur accélération de pesanteur et ses composantes selon un repère orthonormé oxyz s'inclinant avec les fourches,
[fig. 7] représente un schéma de différents modes de modulations du faisceau lumineux en fonction de l'angle d'inclinaison des fourches.

### Descriptif détaillé de l'invention

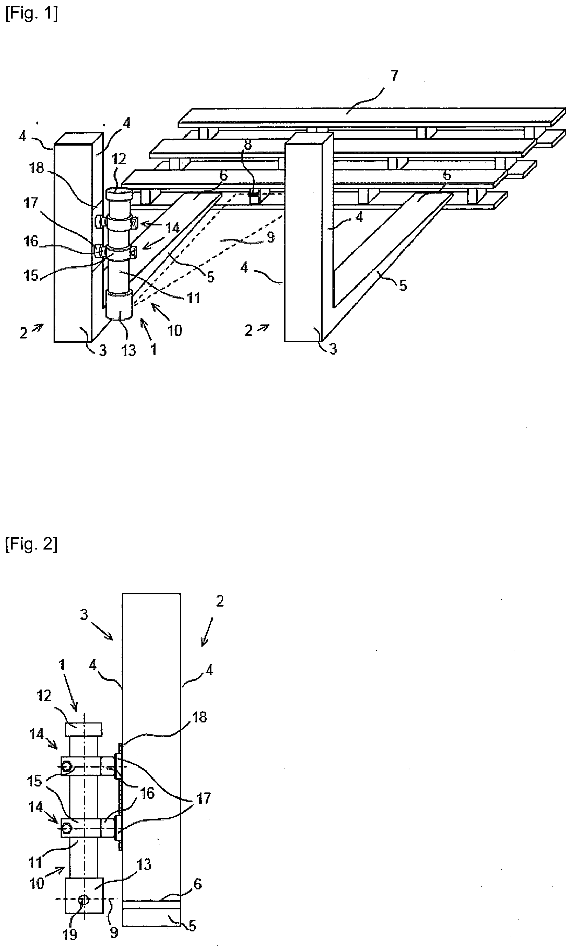

En référence aux figures 1,2 et 3.

Le dispositif (1) de l'invention, constitué d'un corps (10) de forme allongée, de deux attaches rapides (14) et d'un moyen d'indexage (18) prend place sur la face latérale (4) du montant (3) de la fourche (2). C'est en effet un endroit où le dispositif (1) est particulièrement protégé des collisions avec les charges (7) à manutentionner. Selon d'autres variantes, non représentées, le dispositif (1) pourra prendre place ailleurs sur la fourche (2) et plus généralement encore sur tout élément solidaire des fourches (2) et en particuliers sur le tablier ou le mat de l'engin.

Le corps (10) se compose d'un boitier (11) creux cylindrique fermé par un bouchon haut (12) et un bouchon bas (13). Le corps (10) contient le moyen électronique qui met en œuvre principalement un accumulateur d'électricité (31), un accéléromètre (32), un microcontrôleur (33) programmable et un module émetteur (37) d'un faisceau lumineux (9). Le bouchon haut (12) démontable, permet l'accès et le remplacement des accumulateurs (31). Le bouchon bas (13) percé d'un trou (19), lui-même pourvu d'une lentille plane transparente permet le passage du faisceau lumineux (9) émis par le module émetteur (37).

Les deux attaches rapides (14) qui permettent de relier le corps (10) à la fourche (2) sont constituées chacune d'un collier (15) de serrage circulaire, ajustable en diamètre et prenant place sur le boitier (11), d'un moyen magnétique (17) prenant place sur la fourche (2), et d'un moyen élastique (16) solidaire d'une part au collier (11) et solidaire d'autre part au moyen magnétique (17). Le collier (15) permet de régler en hauteur et en rotation le corps (10) du dispositif (1). Pour cela, on desserre le collier (15) du boitier (11), on fait glisser et tourner le boitier (11) dans le collier (15), on resserre le collier (15) qui se solidarise alors au boitier (11). Ainsi on règle en hauteur et en latéralité le faisceau lumineux (9) émis par le dispositif (1) afin que la marque lumineuse (8) générée par le faisceau lumineux (9) vienne frapper la charge (7) à manutentionner à l'endroit précis où les fourches (2) vont venir s'engager. Avantageusement, chacune des deux attaches rapides (14) sera constituée d'un collier (15) de serrage de type collier à vis (15), d'un moyen élastique (16) de type plot en caoutchouc (16), et d'un moyen magnétique (17) de type aimant en pot (17).

Le moyen d'indexage (18) est constitué d'une plaque (18) de faible épaisseur solidarisée à la fourche (2). Cette plaque (18) présente deux perçages pour recevoir et indexer, de façon précise, le moyen magnétique (17) sur la fourche (2). Ces perçages, débouchants, sont parfaitement ajustés à la forme extérieure du moyen magnétique (17). Dans le cas d'aimants en pot (17) de forme circulaire, les trous seront circulaires et de même diamètre que les aimants en pot (17). L'aimant en pot (17) venant se fixer par magnétisme sur la fourche (2) sera alors toujours correctement positionné sur cette dernière. À tout moment il devient alors possible de retirer le dispositif (1) de la fourche (2), puis de le réinstaller plus tard, sans perdre pour autant les réglages de position de ce dernier. Le moyen d'indexage (18) est fixé à la fourche (2), à titre d'exemples, soit par vissage, soit par soudage, soit par collage ou encore par bande autocollante double faces.

L'invention a prévu également, dans une version compacte, la possibilité de n'avoir qu'une seule attache rapide (14). Dans ce cas, il n'y a qu'un seul moyen magnétique (17) associé à un moyen d'indexage (18) ne présentant alors qu'un seul perçage.

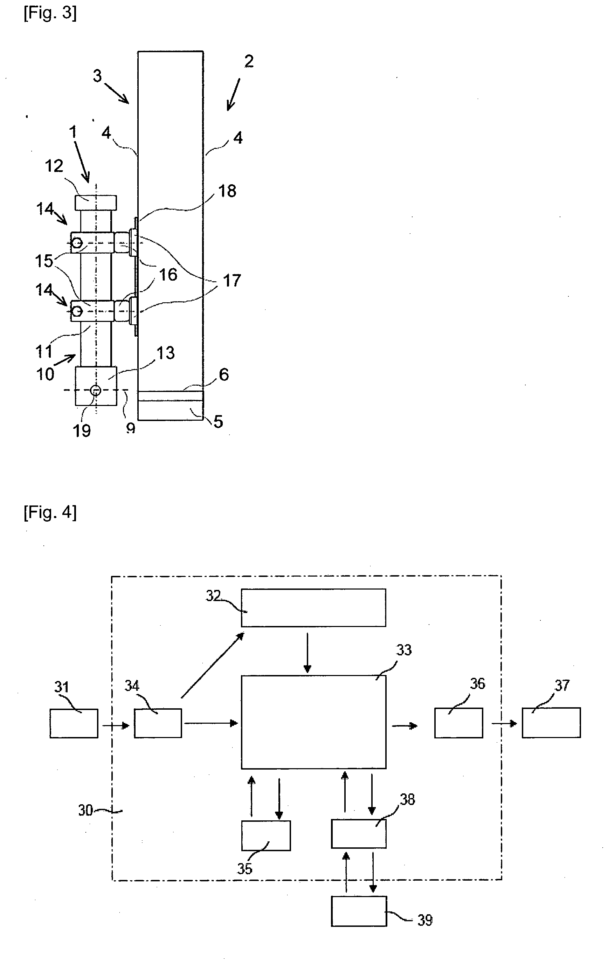

En référence à la figure 4.

Le moyen électronique du dispositif (1) de l'invention met en œuvre principalement un accumulateur d'électricité (31), un accéléromètre (32), un microcontrôleur (33) programmable et un module émetteur (37) d'un faisceau lumineux (9).

L'accéléromètre (32) mesure de façon continue le vecteur accélération totale (26) agissant sur les fourches (2).

Le microcontrôleur (33), chargé d'un programme informatique et recevant les informations de l'accéléromètre (32), détermine par calculs, de façon continue, les valeurs des composantes (27x, 27z) du vecteur accélération de pesanteur (27), les valeurs des vecteurs composantes (28h, 28v) du vecteur accélération de déplacement (28), les valeurs d'inclinaison (22), les vitesses, déplacements et positions horizontaux et verticaux des fourches (2). Toutes ces valeurs mesurées et calculées permettent au microcontrôleur (33) d'identifier l'étape de manutention en cours et de piloter le fonctionnement du module émetteur (37) du faisceau lumineux (9) en fonction d'une part de l'étape de manutention identifiée et d'autre part dudit programme.

L'accumulateur d'électricité (31), l'accéléromètre (32) et le microcontrôleur (33) prennent place sur une carte électronique (30). Carte électronique (30) qui pourra également accueillir d'autres composants comme un régulateur de tension (34), une prise (35), un module émetteur récepteur (38) et un régulateur de tension (36).

L'accumulateur d'électricité (31) est soit du type pile consommable, soit du type batterie rechargeable.

L'accéléromètre (32) est par construction solidaire de la carte électronique (30), elle-même solidaire du reste du dispositif (1) de l'invention, lui-même solidaire des fourches (2). L'accéléromètre (32) " voit " donc en permanence le vecteur accélération totale (26) appliquées aux fourches (2). Ce vecteur accélération totale (26) étant par nature la somme du vecteur accélération de pesanteur (27) et du vecteur accélération de déplacements (28) des fourches (2). Cet accéléromètre (32) est le seul et unique capteur d'informations que l'invention met en œuvre. C'est préférentiellement un accéléromètre (32) de type trois axes qui est mis en œuvre par l'invention.

Le régulateur de tension (34) a pour fonction de maintenir toujours la bonne tension de fonctionnement aux bornes de l'accéléromètre (32) et du microcontrôleur (33). Il va donc ajuster la tension que lui fournit l'accumulateur (31) et exploiter jusqu'à épuisement toute l'énergie contenue dans ce dernier et assurer ainsi une plus grande autonomie de fonctionnement au dispositif (1) de l'invention.

La prise (35) permet de connecter un ordinateur à la carte électronique (30) afin d'injecter ou de corriger le programme informatique chargé dans le microcontrôleur (33). Ce sera par exemple une mini prise USB (35).

Le programme est la traduction en langage informatique des différentes phases du procédé de l'invention. Il pourra utiliser les sous programmes et routines connus de l'homme du métier voire fournis avec les composants informatiques tels que l'accéléromètre (32) ou le microcontrôleur (33). Il pourra mettre également en œuvre des temporisations et des filtres permettant de stabiliser le fonctionnement du procédé de l'invention. Le programme pourra, par exemple, être développé en langage "C" bien connu de l'homme du métier. Le programme pourra être modifié à tout moment pour être ensuite injecté dans le microcontrôleur (33). Ainsi l'invention se dote d'un moyen très souple d'améliorer les fonctions existantes voire de doter l'invention de nouvelles fonctions comme par exemple informer le conducteur du niveau de charge des batteries, des vitesses, ou inclinaisons excessives de l'engin par une modulation spécifique du faisceau lumineux (9).

Selon une variante de l'invention, le programme peut être modifié à distance par liaison radio. Pour cela, un module émetteur récepteur (38) de type " Bluetooth " prend place sur le moyen électronique. Un smartphone (39), d'une part extérieure au dispositif (1), et d'autre part pourvu d'une application de communication dédiée communique alors au module émetteur récepteur (38) de type " Bluetooth " ses modifications de programme.

Le régulateur de tension (36) a pour fonction d'alimenter le module émetteur (37) de faisceau lumineux (9) avec toujours la même tension.

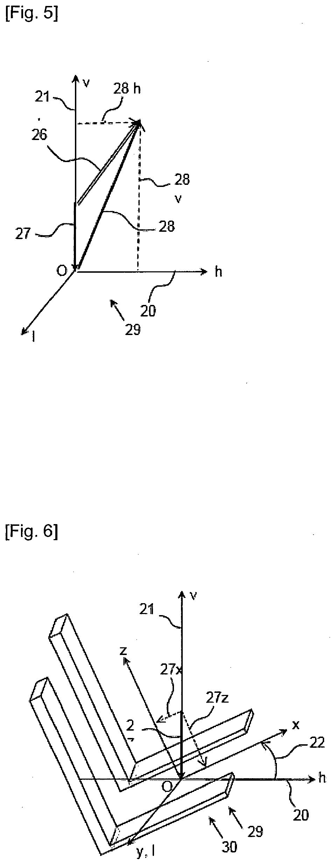

En référence aux figure 5 et 6.

Les mesures et calculs portant sur tous les vecteurs impliqués dans l'invention se font dans deux repères orthonormés (29,30) autrement dit des repères trois axes. Dans ces repères orthonormés (29,30) chacun des vecteurs est défini par ses trois vecteurs composantes. Ce sont les valeurs de ces trois composantes que l'invention mesure, calcule et analyse pour déterminer l'étape de manutention en cours. C'est à ce titre que l'invention a choisi un accéléromètre (32) de type trois axes prenant place sur la carte électronique (30) du moyen électronique.

Le premier repère orthonormé ovhl (29) est un repère attaché à l'engin, engin que l'on considère se déplacer la majeure partie du temps sur un plan horizontal. L'axe vertical ov (21) de ce repère orthonormé ovhl (29) sera toujours confondue avec la verticale terrestre (21) et l'axe horizontal oh de ce repère sera d'une part toujours confondu avec l'horizontal terrestre (20) et d'autre part toujours dans l'axe principal de l'engin, autrement dit dans l'axe avant arrière de l'engin. C'est dans ce repère ovhl (29) que sont mesurés et calculés le vecteur accélération totale (26), le vecteur accélération de pesanteur (27), le vecteur accélération de déplacement (28) et les vecteurs composants (28h, 28v) de l'accélération de déplacement (28).

Le deuxième repère orthonormé oxyz (30) est un repère également attaché à l'engin. Le plan oxz de ce repère orthonormé oxyz (30) est d'une part toujours dans l'axe principal de l'engin et s'incline d'autre part de la même valeur et dans le même sens que les fourches. Ce deuxième repère orthonormé (30) " basculant " étant nécessaire pour calculer l'inclinaison (22) des fourches (2). C'est dans ce repère que sont calculés les composantes (27x,27y) de l'accélération de pesanteur (27). Selon une variante préférentielle, les mesures et calculs portant sur tous les vecteurs impliqués dans l'invention se font uniquement d'une part dans le repère plan vertical ovh du premier repère orthonormé (29) et dans le repère plan vertical oxz du deuxième repère orthonormé (30). En effet dans cette variante, il est considéré que la précision des mesures et des calculs est suffisante pour déterminer les étapes de manutentions en cours.

L'invention a fait le choix d'activer le faisceau lumineux uniquement quand cela s'avère nécessaire. Ainsi le faisceau lumineux (9) est activé pendant au moins une étape choisie parmi l'ensemble des étapes du processus de manutention. L'étape étant identifiée par des calculs et analyses portant sur la seule mesure du vecteur accélération totale (26) agissant sur les fourches (2). Le vecteur accélération totale (26) étant par nature la résultante du vecteur accélération de pesanteur (27) et du vecteur déplacement (28) des fourches (2).

Le faisceau lumineux (9) est activé pendant la seule étape de prise en charge de la charge (7) à manutentionner. Cette étape de prise en charge étant identifiée, de façon continue, par les phases suivantes du procédé :
- extraction du vecteur accélération de déplacement (28) du vecteur accélération totale (26) des fourches (2),
- extraction des deux vecteurs composantes (28h, 28v) du vecteur accélération de déplacement (28) des fourches (2),
- calcul par double intégration mathématique par rapport au temps portant sur les deux dits vecteurs composantes (28h, 28v) des vitesses, déplacements horizontaux et verticaux des fourches (2),
- vérification que lesdites fourches (2) sont en cours de déplacement vertical et que leur déplacement horizontal est lent voire nul.

Dans un mode particulier de fonctionnement, le faisceau lumineux (9) est rendu inactif si la hauteur des bras (5) des fourches (2) par rapport au sol est comprise entre deux valeurs de hauteur prédéterminées. La valeur de la hauteur des bras (5) des fourches (2) étant identifiée et comparer, de façon continue, aux deux valeurs de hauteur prédéterminée, par les phases suivantes du procédé :
- extraction du vecteur accélération de déplacement (28) du vecteur accélération totale (26) des fourches (2),
- extraction du vecteur composante vertical (28v) du vecteur accélération de déplacement (28) des fourches (2),
- calcul par double intégration mathématique par rapport au temps portant sur ledit vecteur composante vertical (28v) afin de déterminer les valeurs de la vitesse, et du déplacement vertical des fourches (2),
- calcul par sommation des déplacements de la hauteur des fourches,
- vérification que la hauteur des fourches (2) est comprise entre les deux valeurs de hauteur prédéterminées.
- Ainsi, le faisceau lumineux (9) sera rendu inactif lorsqu'il se trouvera à hauteur des yeux de personnes se trouvant devant l'engin de manutention.

L'invention a prévu également de déclencher automatiquement le fonctionnement du dispositif (1) dès qu'une accélération de déplacement (28) est détectée, le seuil du déclenchement et la durée de fonctionnement étant réglables.

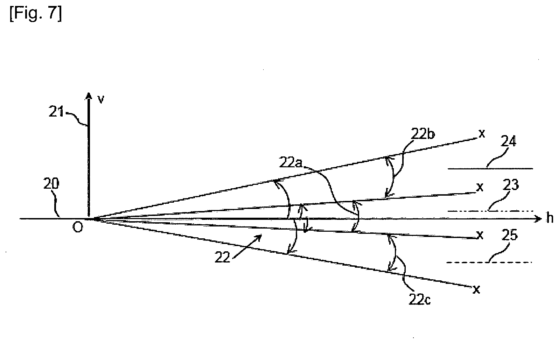

En référence à la figure 7.

Selon l'invention le faisceau lumineux est rendu inactif si les fourches sont trop inclinées vers le haut ou vers le bas et par contre rendu actif voire modulé si ces dernières sont proches de l'horizontal (20).

Ainsi, selon un mode préférentiel, le faisceau lumineux (9) est activé lorsque l'angle d'inclinaison (22) des bras (2) des fourches (5) par rapport à l'horizontale (20) est compris entre deux valeurs angulaires prédéterminées. La valeur de l'angle d'inclinaison (22) des bras (2) des fourches (5) étant identifiée, de façon continue, par les phases suivantes du procédé :
- extraction du vecteur accélération de pesanteur (27) du vecteur accélération totale (26) des fourches (2),
- extraction des vecteurs composantes (27x, 27z) du vecteur accélération de pesanteur (27) suivant un repère orthonormé (30) s'inclinant avec les fourches (2),
- calcul de l'angle d'inclinaison (22) des bras (5) des fourches (2) par rapport à une horizontale (20) par calcul trigonométrique sur les deux vecteurs composantes (27x,27z) du vecteur accélération de pesanteur (27),
- vérification que l'angle d'inclinaison (22) est compris entre les deux valeurs angulaires prédéterminées.

Avantageusement, le faisceau lumineux (9) est activé et modulé suivant des modes (23, 24, 25) différents en fonction de l'angle d'inclinaison (22) des bras (5) des fourches (2) par rapport à l'horizontale (20) :
- un premier mode (23) lorsque l'angle d'inclinaison (22) des bras (5) des fourches (2) est compris dans une fourchette angulaire (22a) voisine de l'horizontale (20),
- un deuxième mode (24) lorsque l'angle d'inclinaison (22) des bras (5) des fourches (2) est compris dans une fourchette angulaire (22b) au-dessus de l'horizontale (20),
- un troisième mode (25) lorsque l'angle d'inclinaison (22) des bras (5) des fourches (2) est compris dans une fourchette angulaire (22c) en-dessous de l'horizontale (20).

La valeur de l'angle d'inclinaison (22) des bras (2) des fourches (5) étant identifiée et comparer aux fourchettes angulaires (22a,22b,22c), de façon continue, par les phases suivantes du procédé :
- extraction du vecteur accélération de pesanteur (27) depuis le vecteur accélération totale (26) des fourches (2),
- extraction des vecteurs composantes (27x, 27z) du vecteur accélération de pesanteur (27) suivant un repère orthonormé (30) s'inclinant avec les fourches (2),
- calcul de l'angle d'inclinaison (22) des bras (5) desdites fourches (2) par rapport à une horizontale (20) par calcul trigonométrique sur les vecteurs composantes (27x,27z) de l'accélération de pesanteur (27),
- vérification que l'angle d'inclinaison (22) est inscrit dans l'une des différentes fourchettes angulaires (22a,22b,22c) et activation du mode (23,24,25) correspondant.

La modulation du faisceau lumineux (9) se présentera préférentiellement sous formes de clignotements ou de rafales de flash. Ainsi l'invention dispose d'un moyen lui permettant à l'instar de l'alphabet morse de donner au conducteur des informations sur l'inclinaison (22) des fourches (2) mais également d'autres informations comme, par exemple, l'état de charges de l'accumulateur (31). Le faisceau lumineux (9) sera préférentiellement un faisceau de type laser. La forme de la marque lumineuse (8) choisie sera telle qu'elle permet de visualiser au mieux le point d'entrée des fourches (2) sous la charge (7). Ce pourra être par exemple, une ligne, deux lignes parallèles, un point. D'une façon générale le faisceau lumineux (9) sera issue d'un module émetteur (37) de faisceau lumineux (9) à faible consommation électrique.

Le dispositif (1) de l'invention trouvera son utilité auprès de tous les conducteurs d'engins voulant améliorer leurs conditions de travail et réduire les pertes produites par manutentions.

## Revendications

1. Procédé d'aide au positionnement des bras (5) de fourches (2) d'un engin de manutention à fourches qui au moyen d'un faisceau lumineux (9) projetant une marque lumineuse (8) sur une charge (7) à manutentionner informe le conducteur dudit engin de manutention de la position relative desdits bras (5) desdites fourches (2) par rapport à ladite charge (7) à manutentionner pour lui permettre de positionner de façon adéquate lesdits bras (5) desdits fourches (2) avant de les engager, en toute sécurité, sous ladite charge (7) à manutentionner, ledit faisceau lumineux (9) étant activé pendant au moins une étape choisie parmi l'ensemble des étapes du processus de manutention, ladite étape étant identifiée par des calculs et analyses portant sur la seule mesure du vecteur accélération totale (26) agissant sur les fourches (2) **caractérisé en ce que** ledit faisceau lumineux (9) est activé pendant l'étape de prise en charge de la charge (7) à manutentionner, ladite étape de prise en charge étant identifiée, de façon continue, par les phases suivantes dudit procédé :
- extraction du vecteur accélération de déplacement (28) du vecteur accélération totale (26) des fourches (2),
- extraction des deux vecteurs composantes (28h, 28v) dudit vecteur accélération de déplacement (28) des fourches (2),
- calcul par double intégration mathématique par rapport au temps portant sur les deux dits vecteurs composantes (28h, 28v) : des vitesses et des déplacements horizontaux et verticaux des fourches (2),
- vérification que lesdites fourches (2) sont en cours de déplacement vertical et que leur déplacement horizontal est lent voire nul.

2. Procédé selon la revendication 1, **caractérisé en ce que** le faisceau lumineux (9) est rendu inactif si la hauteur des bras (5) des fourches (2) par rapport au sol est comprise entre deux valeurs de hauteur prédéterminées, la valeur de ladite hauteur desdits bras (5) desdites fourches (2) étant identifiée et comparée aux deux dites valeurs de hauteur prédéterminée, de façon continue, par les phases suivantes dudit procédé :
- extraction du vecteur accélération de déplacement (28) du vecteur accélération totale (26) des fourches (2),
- extraction du vecteur composante vertical (28v) dudit vecteur accélération de déplacement (28) des fourches (2),
- calcul par double intégration mathématique par rapport au temps portant sur ledit vecteur composante vertical (28v) : de la vitesse et du déplacement vertical desdites fourches (2),
- calcul de la hauteur des fourches par sommation desdits déplacements verticaux,
- vérification que ladite hauteur desdites fourches (2) est comprise entre les deux dites valeurs de hauteur prédéterminées.

3. Procédé selon la revendication 1 ou 2 **caractérisé en ce que** le faisceau lumineux (9) est activé lorsque l'angle d'inclinaison (22) des bras (2) des fourches (5) par rapport à l'horizontale (20) est compris entre deux valeurs angulaires prédéterminées, la valeur dudit angle d'inclinaison (22) desdits bras (2) desdites fourches (5) étant identifiée, de façon continue, par les phases suivantes dudit procédé :
- extraction du vecteur accélération de pesanteur (27) du vecteur accélération totale (26),
- extraction des vecteurs composantes (27x, 27z) dudit vecteur accélération de pesanteur (27) suivant un repère orthonormé (29) s'inclinant avec lesdites fourches (2),
- calcul dudit angle d'inclinaison (22) desdits bras (5) desdites fourches (2) par rapport à une horizontale (20) par calcul trigonométrique sur les deux dits vecteurs composantes (27x,27z) dudit vecteur accélération de la pesanteur (27),
- vérification que ledit angle d'inclinaison (22) est compris entre les deux dites valeurs angulaires prédéterminés.

4. Procédé selon la revendication 1, 2 ou 3 **caractérisé en ce que** ledit faisceau lumineux (9) est activé et modulé suivant des modes (23, 24, 25) différents en fonction de l'angle d'inclinaison (22) desdits bras (5) desdites fourches (2) par rapport à l'horizontale (20) :
- un premier mode (23) lorsque ledit angle d'inclinaison (22) desdits bras (5) desdites fourches (2) est compris dans une fourchette angulaire (22a) voisine de l'horizontale (20),
- un deuxième mode (24) lorsque ledit angle d'inclinaison (22) desdits bras (5) desdites fourches (2) est compris dans une fourchette angulaire (22b) au-dessus de l'horizontale (20),
- un troisième mode (25) lorsque ledit angle d'inclinaison (22) desdits bras (5) desdites fourches (2) est compris dans une fourchette angulaire (22c) en-dessous de l'horizontale (20),
- la valeur dudit angle d'inclinaison (22) desdits bras (5) desdites fourches (2) étant identifiée et comparer auxdites fourchettes angulaires (22a,22b,22c), de façon continue, parles phases suivantes dudit procédé :
o extraction du vecteur accélération de pesanteur (27) du vecteur accélération totale (26),
∘ extraction des vecteurs composantes (27x, 27z) dudit vecteur accélération de pesanteur (27) suivant un repère orthonormé (29) s'inclinant avec lesdites fourches (2),
o calcul de l'angle d'inclinaison (22) desdits bras (5) desdites fourches (2) par rapport à une horizontale (20) par calcul trigonométrique sur lesdits vecteurs composantes (27x,27z) de ladite accélération de pesanteur (27),
∘ vérification que ledit angle d'inclinaison (22) est compris dans l'une desdites différentes fourchettes angulaires (22a, 22b, 22c).

5. Dispositif (1) d'aide au positionnement des bras (5) de fourches (2) d'un engin de manutention à fourches (2) qui au moyen d'un faisceau lumineux (9) projetant une marque lumineuse (8) sur une charge (7) à manutentionner informe le conducteur dudit engin de manutention de la position relative desdits bras (5) desdites fourches (2) par rapport à ladite charge (7) à manutentionner pour lui permettre de positionner de façon adéquate lesdits bras (5) desdites fourches (2) avant de les engager, en toute sécurité, sous ladite charge (7) à manutentionner, comportant un corps (10) creux, d'une part installé sur l'une desdites fourche (2) et d'autre part contenant un moyen électronique, mettant en œuvre un accumulateur d'électricité (31), un accéléromètre (32), un microcontrôleur (33) programmable et un module émetteur (37) d'un faisceau lumineux (9) et permettant la mise en œuvre du procédé selon l'une quelconque des revendications 1 à 4 **caractérisé en ce que** le corps (10) est constitué d'un boitier (11) d'une part cylindrique et creux et d'autre part fermé par un bouchon haut (12) et un bouchon bas (13), ledit corps (10) étant relié à la fourche (2) au moyen d'au moins une attache rapide (14), elle-même constituée :
- d'un collier (15) de serrage circulaire, ajustable en diamètre et prenant place sur ledit boitier (11),
- d'un moyen magnétique (17) prenant place sur ladite fourche (2),
- d'un moyen élastique (16) d'une part solidaire audit collier (11) et d'autre part solidaire audit moyen magnétique (17).

6. Dispositif (1) selon la revendication 5, **caractérisé en ce que** le collier (15) de serrage est de type collier à vis (15), le moyen élastique (16) est un plot en caoutchouc (16), le moyen magnétique (17) est un aimant en pot (17).

7. Dispositif (1) selon la revendication 5 ou 6 **caractérisé en ce qu'**un moyen d'indexage (18) du moyen magnétique (17) est solidarisé à la fourche (2), ledit moyen d'indexage (18) étant constitué d'une plaque (18) de faible épaisseur solidarisée à ladite fourche (2), ladite plaque (18) présentant au moins un perçage pour recevoir et indexer, de façon précise, ledit moyen magnétique (17) sur ladite fourche (2).

8. Dispositif (1) selon l'une quelconque des revendications 5,6 ou 7, **caractérisé en ce que** le microcontrôleur (33) est chargé d'un programme informatique qui peut être modifié à distance, par liaison radio, au moyen :
- d'un module émetteur récepteur (38), de type " Bluetooth ", prenant place sur le moyen électronique,
- d'un smartphone (39), d'une part extérieure au dispositif (1), et d'autre part pourvu d'une application de communication dédiée, ledit smartphone (39) pouvant communiquer par ondes radio avec ledit module émetteur récepteur (38).

## Patentansprüche

1. Verfahren zur Unterstützung der Positionierung der Arme (5) von Gabeln (2) eines Gabelstaplers das, mittels eines Lichtstrahls (9), der eine Lichtmarkierung (8) auf eine zu handhabende Last (7) projiziert, den Fahrer des genannten Staplers über die relative Position der Arme (5) der Gabeln (2) in Bezug auf die zu handhabende Last (7) informiert, um es ihm zu ermöglichen, die Arme (5) der Gabeln (2) angemessen zu positionieren, bevor sie in aller Sicherheit unter die zu handhabende Last (7) eingreifen, wobei der Lichtstrahl (9) während mindestens eines Schritts aktiviert wird, der aus der Gesamtheit der Schritte des Handhabungsprozesses ausgewählt wird, wobei der Schritt durch Berechnungen und Analysen identifiziert wird, die sich allein auf die Messung des Gesamtbeschleunigungsvektors (26) beziehen, der auf die Gabeln (2) wirkt, **dadurch gekennzeichnet, dass** der Lichtstrahl (9) während des Schritts der Übernahme der zu handhabenden Last (7) aktiviert wird, wobei der Schritt der Übernahme kontinuierlich durch die folgenden Phasen des Verfahrens identifiziert wird:
- Extraktion des Bewegungsbeschleunigungsvektors (28) aus dem Gesamtbeschleunigungsvektor (26) der Gabeln (2),
- Extraktion der beiden Komponentenvektoren (28h, 28v) des Bewegungsbeschleunigungsvektors (28) der Gabeln (2),
- Berechnung durch doppelte mathematische Integration über die Zeit, die sich auf die beiden Komponentenvektoren (28h, 28v) bezieht: der Geschwindigkeiten und der horizontalen und vertikalen Verschiebungen der Gabeln (2),
- Überprüfung, dass die Gabeln (2) vertikal bewegt werden und dass ihre horizontale Bewegung langsam oder sogar null ist.

2. Verfahren nach Anspruch 1, **dadurch gekennzeichnet, dass** der Lichtstrahl (9) inaktiv gemacht wird, wenn die Höhe der Arme (5) der Gabeln (2) über dem Boden zwischen zwei vorbestimmten Höhenwerten liegt, wobei der Wert der Höhe der Arme (5) der Gabeln (2) identifiziert und mit den beiden vorbestimmten Höhenwerten verglichen wird, und zwar kontinuierlich durch die folgenden Phasen des Verfahrens :
- Extraktion des Bewegungsbeschleunigungsvektors (28) aus dem Gesamtbeschleunigungsvektor (26) der Gabeln (2),
- Extraktion des vertikalen Komponentenvektors (28v) des Bewegungsbeschleunigungsvektors (28) der Gabeln (2),
- Berechnung der Geschwindigkeit und der vertikalen Verschiebung der Gabeln (2) durch doppelte mathematische Integration über die Zeit, die sich auf den Vektor der vertikalen Komponente (28v) bezieht,
- Berechnung der Höhe der Gabeln durch Summation der genannten vertikalen Verschiebungen,
- Überprüfung, dass die Höhe der Gabeln (2) zwischen den beiden vorbestimmten Höhenwerten liegt.

3. Verfahren nach Anspruch 1 oder 2, **dadurch gekennzeichnet, dass** der Lichtstrahl (9) aktiviert wird, wenn der Neigungswinkel (22) der Arme (2) der Gabeln (5) in Bezug auf die Horizontale (20) zwischen zwei vorbestimmten Winkelwerten liegt, wobei der Wert des Neigungswinkels (22) der Arme (2) der Gabeln (5) kontinuierlich durch die folgenden Phasen des Verfahrens identifiziert wird:
- Extraktion des Vektors der Erdbeschleunigung (27) aus dem Vektor der Gesamtbeschleunigung (26),
- Extraktion der Komponentenvektoren (27x, 27z) des Erdbeschleunigungsvektors (27) entlang eines orthonormalen Koordinatensystems (29), das sich mit den Gabeln (2) neigt,
- Berechnung des Neigungswinkels (22) der Arme (5) der Gabeln (2) in Bezug auf eine Horizontale (20) durch trigonometrische Berechnung auf den beiden Komponentenvektoren (27x, 27z) des Erdbeschleunigungsvektors (27),
- Überprüfung, dass der Neigungswinkel (22) zwischen den beiden vorbestimmten Winkelwerten liegt.

4. Verfahren nach Anspruch 1, 2 oder 3, **dadurch gekennzeichnet, dass** der Lichtstrahl (9) in Abhängigkeit vom Neigungswinkel (22) der Arme (5) der Gabeln (2) in Bezug auf die Horizontale (20) in verschiedenen Modi (23, 24, 25) aktiviert und moduliert wird:
- einen ersten Modus (23), wenn der Neigungswinkel (22) der Arme (5) der Gabeln (2) innerhalb eines Winkelbereichs (22a) liegt, der nahe der Horizontalen (20) liegt,
- einen zweiten Modus (24), wenn der Neigungswinkel (22) der Arme (5) der Gabeln (2) innerhalb eines Winkelbereichs (22b) oberhalb der Horizontalen (20) liegt,
- einen dritten Modus (25), wenn der Neigungswinkel (22) der Arme (5) der Gabeln (2) innerhalb eines Winkelbereichs (22c) unterhalb der Horizontalen (20) liegt,
- wobei der Wert des Neigungswinkels (22) der Arme (5) der Gabeln (2) kontinuierlich durch die folgenden Phasen des Verfahrens identifiziert und mit den Winkelbereichen (22a, 22b, 22c) verglichen wird:
- Extraktion des Vektors der Erdbeschleunigung (27) aus dem Vektor der Gesamtbeschleunigung (26),
- Extraktion der Komponentenvektoren (27x, 27z) des Erdbeschleunigungsvektors (27) entlang eines orthonormalen Koordinatensystems (29), das sich mit den Gabeln (2) neigt,
- Berechnung des Neigungswinkels (22) der Arme (5) der Gabeln (2) in Bezug auf eine Horizontale (20) durch trigonometrische Berechnung auf den Komponentenvektoren (27x, 27z) der Erdbeschleunigung (27),
- Verifizierung, dass der Neigungswinkel (22) innerhalb einer der verschiedenen Winkelbereiche (22a, 22b, 22c) liegt.

5. Hilfsvorrichtung (1) zur Positionierung der Arme (5) von Gabeln (2) eines Gabelstaplers mit Gabeln (2), die mittels eines Lichtstrahls (9), der eine Lichtmarkierung (8) auf eine zu handhabende Last (7) projiziert, den Fahrer des Gabelstaplers über die relative Position der Arme (5) der Gabeln (2) in Bezug auf die zu handhabende Last (7) informiert, um ihm zu ermöglichen, die Arme (5) der Gabeln (2) angemessen zu positionieren, bevor er sie in Eingriff nimmt, in aller Sicherheit unter die zu handhabende Last (7) zu schieben, mit einem Hohlkörper (10), der einerseits auf einer der Gabeln (2) installiert ist und andererseits ein elektronisches Mittel enthält, das einen elektrischen Akkumulator (31), einen Beschleunigungsmesser (32), einen programmierbaren Mikrocontroller (33) und ein Modul (37) zum Aussenden eines Lichtstrahls (9) umfasst und die Durchführung des Verfahrens nach einem der Ansprüche 1 bis 4 ermöglicht, **dadurch gekennzeichnet, dass** der Körper (10) aus einem Gehäuse (11) besteht, das einerseits zylindrisch und hohl ist und andererseits durch einen oberen Stopfen (12) und einen unteren Stopfen (13) verschlossen ist, wobei der Körper (10) mit der Gabel (2) mittels mindestens eines Schnellverschlusses (14) verbunden ist, der seinerseits aus :
- einer kreisförmigen Klemmschelle (15), die im Durchmesser verstellbar ist und auf dem Gehäuse (11) Platz findet,
- einem magnetischen Mittel (17), das auf der Gabel (2) Platz findet,
- einem elastischen Mittel (16), das einerseits fest mit der Schelle (11) und andererseits fest mit dem magnetischen Mittel (17) verbunden ist.

6. Vorrichtung (1) nach Anspruch 5, **dadurch gekennzeichnet, dass** die Klemmschelle (15) vom Typ Schraubschelle (15) ist, das elastische Mittel (16) ein Gummipolster (16) ist, das magnetische Mittel (17) ein Topfmagnet (17) ist.

7. Vorrichtung (1) nach Anspruch 5 oder 6, **dadurch gekennzeichnet, dass** ein Indexierungsmittel (18) des magnetischen Mittels (17) fest mit der Gabel (2) verbunden ist, wobei das Indexierungsmittel (18) aus einer Platte (18) mit geringer Dicke besteht, die fest mit der Gabel (2) verbunden ist, wobei die Platte (18) mindestens eine Bohrung aufweist, um das magnetische Mittel (17) auf der Gabel (2) aufzunehmen und genau zu indexieren.

8. Vorrichtung (1) nach einem der Ansprüche 5, 6 oder 7, **dadurch gekennzeichnet, dass** der Mikrocontroller (33) mit einem Computerprogramm geladen ist, das aus der Ferne über eine Funkverbindung geändert werden kann mittels :
- eines Sende- und Empfangsmoduls (38) vom Typ " Bluetooth ", das auf dem elektronischen Mittel Platz nimmt,
- eines Smartphones (39), das sich einerseits außerhalb der Vorrichtung (1) befindet und andererseits mit einer dedizierten Kommunikationsanwendung versehen ist, wobei das Smartphone (39) über Funkwellen mit dem Sende- und Empfangsmodul (38) kommunizieren kann.

## Claims

1. A method of assisting in the positioning of the arms (5) of forks (2) of a forklift truck which, by means of a light beam (9) projecting a luminous mark (8) onto a load (7) to be handled, informs the driver of said truck of the relative position of said arms (5) of said forks (2) with respect to said load (7) to be handled so as to enable him to position said arms (5) of said forks (2) adequately prior to inserting them, in complete safety, under said load (7) to be handled, said light beam (9) being activated during at least one step chosen from among all the steps of the handling process, said step being identified by calculations and analyses relating solely to the measurement of the total acceleration vector (26) acting on the forks (2), **characterised in that** said light beam (9) is activated during the step of taking charge of the load (7) to be handled, said take-over step being identified, in a continuous manner, by the following phases of said process:
- extraction of the displacement acceleration vector (28) from the total acceleration vector (26) of the forks (2),
- extraction of the two component vectors (28h, 28v) of said displacement acceleration vector (28) of the forks (2)
- calculation by double mathematical integration with respect to time of said two component vectors (28h, 28v): of the horizontal and vertical speeds and displacements of the forks (2),
- verification that the said forks (2) are in the process of moving vertically and that their horizontal movement is slow or even zero.

2. Method according to claim 1, **characterized in that** the light beam (9) is made inactive if the height of the arms (5) of the forks (2) with respect to the ground is comprised between two predetermined height values, the value of said height of said arms (5) of said forks (2) being identified and compared to said two predetermined height values, continuously, by the following steps of said method:
- extracting the displacement acceleration vector (28) from the total acceleration vector (26) of the forks (2),
- extraction of the vertical component vector (28v) of said displacement acceleration vector (28) of the forks (2)
- calculating by double mathematical integration with respect to time on said vertical component vector (28v): the speed and the vertical displacement of said forks (2),
- calculation of the height of the forks by summing said vertical displacements,
- verification that said height of said forks (2) is between said two predetermined height values.

3. Method according to claim 1 or 2, **characterized in that** the light beam (9) is activated when the angle of inclination (22) of the arms (2) of the forks (5) with respect to the horizontal (20) is comprised between two predetermined angular values, the value of said angle of inclination (22) of said arms (2) of said forks (5) being identified, in a continuous manner, by the following steps of said method:
- extraction of the gravity acceleration vector (27) from the total acceleration vector (26),
- extracting the component vectors (27x, 27z) of said gravity acceleration vector (27) along an orthonormal reference frame (29) inclining with said forks (2),
- calculating said angle of inclination (22) of said arms (5) of said forks (2) with respect to a horizontal (20) by trigonometric calculation on said two component vectors (27x, 27z) of said gravity acceleration vector (27)
- checking that said angle of inclination (22) is between said two predetermined angular values.

4. Method according to claim 1, 2 or 3, **characterised in that** said light beam (9) is activated and modulated according to different modes (23, 24, 25) depending on the angle of inclination (22) of said arms (5) of said forks (2) with respect to the horizontal (20):
- a first mode (23) when said angle of inclination (22) of said arms (5) of said forks (2) is within an angular range (22a) close to the horizontal (20),
- a second mode (24) when said angle of inclination (22) of said arms (5) of said forks (2) is within an angular range (22b) above the horizontal (20)
- a third mode (25) when said angle of inclination (22) of said arms (5) of said forks (2) is within an angular range (22c) below the horizontal (20),
- the value of said inclination angle (22) of said arms (5) of said forks (2) being identified and compared with said angular ranges (22a, 22b, 22c), continuously, by the following steps of said method:
o extraction of the gravity acceleration vector (27) from the total acceleration vector (26)
- extraction of the component vectors (27x, 27z) of said gravity acceleration vector (27) along an orthonormal reference frame (29) inclining with said forks (2)
- calculating the angle of inclination (22) of said arms (5) of said forks (2) with respect to a horizontal (20) by trigonometric calculation on said component vectors (27x, 27z) of said acceleration of gravity (27)
- checking that said angle of inclination (22) is within one of said different angular ranges (22a, 22b, 22c).

5. Device (1) for assisting in the positioning of the arms (5) of the forks (2) of a handling machine with forks (2) which, by means of a light beam (9) projecting a luminous mark (8) onto a load (7) to be handled, informs the driver of the said handling machine of the relative position of the said arms (5) of the said forks (2) with respect to the said load (7) to be handled, so as to enable him to position the said arms (5) of the said forks (2) adequately prior to engaging them in complete safety, under said load (7) to be handled, comprising a hollow body (10), on the one hand installed on one of said forks (2) and on the other hand containing an electronic means, implementing an electricity accumulator (31), an accelerometer (32) a programmable microcontroller (33) and a module (37) for emitting a light beam (9) and allowing the implementation of the method according to any one of claims 1 to 4, **characterised in that** the body (10) is constituted by a casing (11) which is on the one hand cylindrical and hollow and on the other hand closed by a top plug (12) and a bottom plug (13), the said body (10) being connected to the fork (2) by means of at least one quick-release fastener
- a circular clamp (15), adjustable in diameter and taking place on said body (11)
- a magnetic means (17) mounted on said fork (2)
- an elastic means (16) on the one hand integral with said collar (11) and on the other hand integral with said magnetic means (17).

6. Device (1) according to claim 5, **characterised in that** the clamping collar (15) is of the screw collar type (15), the elastic means (16) is a rubber pad (16), the magnetic means (17) is a pot magnet (17).

7. Device (1) according to claim 5 or 6, **characterised in that** an indexing means (18) for the magnetic means (17) is attached to the fork (2), said indexing means (18) consisting of a thin plate (18) attached to said fork (2), said plate (18) having at least one hole for receiving and indexing, in a precise manner, said magnetic means (17) on said fork (2).

8. Device (1) according to any one of claims 5, 6 or 7, **characterised in that** the microcontroller (33) is loaded with a computer program which can be modified remotely, by radio link, by means of:
- a transceiver module (38), of the "Bluetooth" type, taking place on the electronic means,
- a smartphone (39), on the one hand external to the device (1), and on the other hand provided with a dedicated communication application, said smartphone (39) being able to communicate by radio waves with said transmitter-receiver module (38).
